# EUROPÄISCHE PATENTSCHRIFT

(11) **EP 3 932 724 B1**
(45) Veröffentlichungstag und Bekanntmachung des Hinweises auf die Patenterteilung: **27.12.2023**
(21) Anmeldenummer: 21178589.4
(22) Anmeldetag: 09.06.2021
(51) Int. Cl.: B60L 5/28, B61L 3/12, B61L 25/02, B60M 7/00, B61L 27/00, B60L 5/32, B60L 9/00, B60M 1/36, B61L 1/08

(54) **FAHRZEUG MIT STROMABNEHMER SOWIE STRECKENLAGE FÜR FAHRZEUGE MIT STROMABNEHMER**
VEHICLE WITH CURRENT COLLECTOR AND RAIL FOR VEHICLES WITH CURRENT COLLECTOR
VÉHICULE POURVU DE COLLECTEUR DE COURANT, AINSI QUE COUCHE DE PISTE POUR VÉHICULES À COLLECTEUR DE COURANT

(30) Priorität: 30.06.2020 DE 102020208121
(43) Veröffentlichungstag der Anmeldung: 05.01.2022
(73) Patentinhaber: Siemens Mobility GmbH, 81739 München (DE)
(72) Erfinder: Hassler, Stefan, 91281 Kirchenthumbach, OT Neuzirkendorf (DE)
(74) Vertreter: Siemens Patent Attorneys

(56) Entgegenhaltungen:
- EP-A1- 1 591 301
- EP-A1- 2 810 847
- EP-A1- 3 587 210
- WO-A2-2004/106133
- DE-A1- 4 334 716
- JP-A- 2010 183 771
- JP-A- 2011 024 420
- US-A- 3 268 727
- US-A1- 2015 344 048

## Beschreibung

Die Erfindung bezieht sich unter anderem auf Fahrzeuge mit zumindest einem verstellbaren Stromabnehmer, der in einer ausgefahrenen Stellung zur Anlage an einem streckenseitigen Leiter eines streckenseitigen Energieversorgungsnetzes geeignet ist und in einer eingefahrenen Stellung von dem streckenseitigen Leiter getrennt ist.

Fahrzeuge dieser Art sind beispielsweise im Bereich der Schienenfahrzeugtechnik bekannt. Befahren die Schienenfahrzeuge elektrifizierte Streckenabschnitte, so fahren sie ihre Pantographen aus, um Energie vom streckenseitigen Energieversorgungsnetz entnehmen zu können. Befahren sie - mit Energie aus einer anderen Energiequelle - hingegen nicht elektrifizierte Streckenabschnitte, so werden die Pantographen eingefahren, um Beschädigungen am Pantographen oder durch den Pantographen zu vermeiden. Das Einfahren bzw. Ausfahren der Pantographen wird bei herkömmlichen Schienenfahrzeugen manuell vom Schienenfahrzeugführer ausgelöst.

Das Dokument EP 3 587 210 A1 offenbart ein Schienenfahrzeug mit einer Traktionseinrichtung sowie Hilfsbetrieben, die mittels Verbindungsmitteln alternativ von einer ersten oder einer zweiten elektrischen Energieversorgungseinrichtung versorgt werden, wobei die erste Energieversorgungseinrichtung einen Stromabnehmer umfasst, welcher von einer Steuereinheit für eine Verbindung mit einer Energieversorgungsquelle gesteuert wird. Ein Übergang von der ersten zu der zweiten Energieversorgung erfolgt automatisch in Abhängigkeit von der Position des Schienenfahrzeugs, wobei zwei Antennen des Schienenfahrzeugs unterschiedliche Signale von zwei Sendern einer Balise empfangen. Das Dokument US 2015/344048 A1 offenbart ein Kommunikationssystem für einen Datenaustausch zwischen einer bordeigenen Kommunikationseinrichtung einer Lokomotive und einer streckenseitigen Kommunikationseinrichtung einer Streckeneinrichtung. Dokument DE 43 34 716 A1 betrifft ein Verfahren zur Regelung der Kontaktkraft zwischen Stromabnehmer und Fahrdraht. Dokument US 3,268,727 betrifft ein automatisches Signalisierungs- und Zugsteuerungssystem.

Der Erfindung liegt die Aufgabe zugrunde, ein Fahrzeug der oben beschriebenen Art hinsichtlich der Verstellung der Stromabnehmer zu verbessern.

Diese Aufgabe wird erfindungsgemäß durch ein Fahrzeug mit den Merkmalen gemäß Patentanspruch 1 gelöst. Vorteilhafte Ausgestaltungen des erfindungsgemäßen Fahrzeugs sind in Unteransprüchen angegeben.

Danach ist erfindungsgemäß vorgesehen, dass das Fahrzeug eine Erkennungseinrichtung aufweist, die geeignet ist, das Passieren von streckenseitigen Balisen eines ersten Balisentyps und eines zweiten Balisentyps zu unterscheiden und jeweils beim Passieren einer Balise des ersten Balisentyps ein erstes Balisenerkennungssignal und beim Passieren von Balisen des zweiten Balisentyps jeweils ein zweites Balisenerkennungssignal zu erzeugen, und das Fahrzeug außerdem eine Steuereinrichtung aufweist, die anhand der zeitlichen Reihenfolge des Auftretens von ersten und zweiten Balisenerkennungssignalen ein Steuersignal erzeugt, das die Stellung des Stromabnehmers selbst verändert oder das Umstellen der Stellung des Stromabnehmers ermöglicht.

Die Steuereinrichtung ist erfindungsgemäß durch eine hartverdrahtete Logikschaltung gebildet oder weist diese zumindest auch auf.

Erfindungsgemäß weist die Steuereinrichtung ausgangsseitig ein Ausgangsflipflop auf, das an einem Setzeingang mit einen Setzsignal gesetzt wird, wenn das erste Balisenerkennungssignal vor dem zweiten Balisenerkennungssignal anliegt, und an einem Rücksetzeingang rückgesetzt wird, wenn das zweite Balisenerkennungssignal vor dem ersten Balisenerkennungssignal anliegt, wobei dem Setzeingang des Ausgangsflipflops ein Setzzweig und dem Rücksetzeingang des Ausgangsflipflops ein Rücksetzzweig vorgeordnet ist und wobei der Setzzweig und der Rücksetzzweig jeweils zumindest ein Hilfsflipflop aufweisen, das an einem Rücksetzeingang zurückgesetzt wird, wenn das binäre Ausgangssignal am Signalausgang des Ausgangsflipflops einen Flankenwechsel vollzieht.

Ein wesentlicher Vorteil des erfindungsgemäßen Fahrzeugs ist darin zu sehen, dass dieses aufgrund der erfindungsgemäß vorgesehenen Erkennungseinrichtung und der erfindungsgemäß vorgesehenen Steuereinrichtung automatisch das Verlassen elektrifizierter Streckenabschnitte und das Wiedereinfahren in elektrifizierte Streckenabschnitte erkennen kann und somit beispielsweise automatisch bzw. selbsttätig ein Einfahren des oder der Stromabnehmer vornehmen kann, um Beschädigungen an Fahrzeug und/oder Strecke zu vermeiden.

Ein weiterer wesentlicher Vorteil der Erfindung besteht darin, dass streckenseitig lediglich zwei unterschiedliche Balisentypen bereitgestellt werden müssen. Für die fahrzeugseitige Steuerung des oder der Stromabnehmer muss lediglich gewährleistet werden, dass die Balisen hinsichtlich ihres Typs unterscheidbar sind; sonstige Qualitäten oder Fähigkeiten müssen die Balisen nicht aufweisen und können somit deutlich kostengünstiger als beispielsweise ETSC-kompatible Balisen bzw. Eurobalisen hergestellt werden.

Die Steuereinrichtung erzeugt vorzugsweise ausgangsseitig als Steuersignal ein Einfahrsteuersignal, das ein Einfahren des Stromabnehmers auslöst, wenn das erste Balisenerkennungssignal vor dem zweiten Balisenerkennungssignal erkannt wird.

Die Steuereinrichtung erzeugt vorzugsweise ausgangsseitig als Steuersignal ein Freigabesignal, das ein Ausfahren des Stromabnehmers selbst auslöst oder das Ausfahren des Stromabnehmers zumindest ermöglicht, wenn das erste Balisenerkennungssignal nach dem zweiten Balisenerkennungssignal erkannt wird.

Als besonders vorteilhaft wird es angesehen, wenn das Fahrzeug ein pneumatisches Ventil aufweist, das bei Vorliegen des Einfahrsteuersignals geöffnet wird und das Einfahren des Stromabnehmers erzwingt und bei Vorliegen des Freigabesignals geschlossen wird und ein Ausfahren des Stromabnehmers durch Druckbeaufschlagung ermöglicht.

Bei einer besonders vorteilhaften Variante ist vorgesehen, dass an dem Signalausgang des Ausgangsflipflops als das Steuersignal das binäre Ausgangssignal ausgegeben wird, wobei einer der binären Signalpegel des binären Ausgangssignals das Freigabesignal und der andere Signalpegel des binären Ausgangssignals das Einfahrsteuersignal bildet.

Die Erfindung bezieht sich außerdem auf ein Verfahren zum Betreiben eines Fahrzeugs, das mit einem verstellbaren Stromabnehmer, der in einer ausgefahrenen Stellung zur Anlage an einem streckenseitigen Leiter eines streckenseitigen Energieversorgungsnetzes geeignet ist und in einer eingefahrenen Stellung von dem streckenseitigen Leiter getrennt ist, ausgestattet ist, wobei der Stromabnehmer nach dem Einfahren in einen elektrifizierten Streckenabschnitt ausgefahren wird oder zumindest ausgefahren werden kann und vor dem Verlassen eines elektrifizierten Streckenabschnitts eingefahren wird. Dabei ist vorgesehen, dass das Passieren von streckenseitigen Balisen eines ersten Balisentyps und eines zweiten Balisentyps unterschieden wird und jeweils beim Passieren einer Balise des ersten Balisentyps ein erstes Balisenerkennungssignal und beim Passieren von Balisen des zweiten Balisentyps jeweils ein zweites Balisenerkennungssignal erzeugt wird, und mittels einer Steuereinrichtung anhand der zeitlichen Reihenfolge des Auftretens von ersten und zweiten Balisenerkennungssignalen ein Steuersignal erzeugt wird, das die Stellung des Stromabnehmers selbst verändert oder das Umstellen der Stellung des Stromabnehmers ermöglicht. Erfindungsgemäß ist die Steuereinrichtung durch eine hartverdrahtete Logikschaltung gebildet oder weist diese zumindest auch auf, wobei die Steuereinrichtung ausgangsseitig ein Ausgangsflipflop aufweist, das an einem Setzeingang mit einen Setzsignal gesetzt wird, wenn das erste Balisenerkennungssignal vor dem zweiten Balisenerkennungssignal anliegt, und an einem Rücksetzeingang rückgesetzt wird, wenn das zweite Balisenerkennungssignal vor dem ersten Balisenerkennungssignal anliegt, wobei dem Setzeingang des Ausgangsflipflops ein Setzzweig und dem Rücksetzeingang des Ausgangsflipflops ein Rücksetzzweig vorgeordnet ist und wobei der Setzzweig und der Rücksetzzweig jeweils zumindest ein Hilfsflipflop aufweisen, das an einem Rücksetzeingang zurückgesetzt wird, wenn das binäre Ausgangssignal am Signalausgang des Ausgangsflipflops einen Flankenwechsel vollzieht

Bezüglich der Vorteile und vorteilhafter Ausgestaltungen des erfindungsgemäßen Verfahrens sei auf die obigen Ausführungen im Zusammenhang mit dem erfindungsgemäßen Fahrzeug verwiesen, da diese für das erfindungsgemäße Verfahren entsprechend gelten.

Die Erfindung wird nachfolgend anhand von Ausführungsbeispielen näher erläutert; dabei zeigen beispielhaft:
- Figur 1: ein Ausführungsbeispiel für eine erfindungsgemäße Schienenfahrzeugstrecke einer Eisenbahngleisanlage, die von einem Ausführungsbeispiel für ein erfindungsgemäßes Schienenfahrzeug befahren wird,
- Figur 2: das Schienenfahrzeug gemäß Figur 1 bei einem Ausfahren aus einem elektrifizierten Streckenabschnitt,
- Figur 3: das Schienenfahrzeug gemäß Figur 1 bei einem Wiedereinfahren in den elektrifizierten Streckenabschnitt,
- Figur 4: ein Ausführungsbeispiel für eine hartverdrahtete Logikschaltung, die als Steuereinrichtung bei dem Fahrzeug gemäß den Figuren 1 bis 3 eingesetzt werden kann,
- Figur 5: ein Ausführungsbeispiel für eine nicht erfindungsgemäße softwareimplementierte Steuereinrichtung, die für das Fahrzeug gemäß den Figuren 1 bis 3 geeignet ist, und
- Figur 6: ein weiteres Ausführungsbeispiel für eine nicht erfindungsgemäße softwareimplementierte Steuereinrichtung, die für das Fahrzeug gemäß den Figuren 1 bis 3 geeignet ist.

In den Figuren werden der Übersicht halber für identische oder vergleichbare Komponenten stets dieselben Bezugszeichen verwendet.

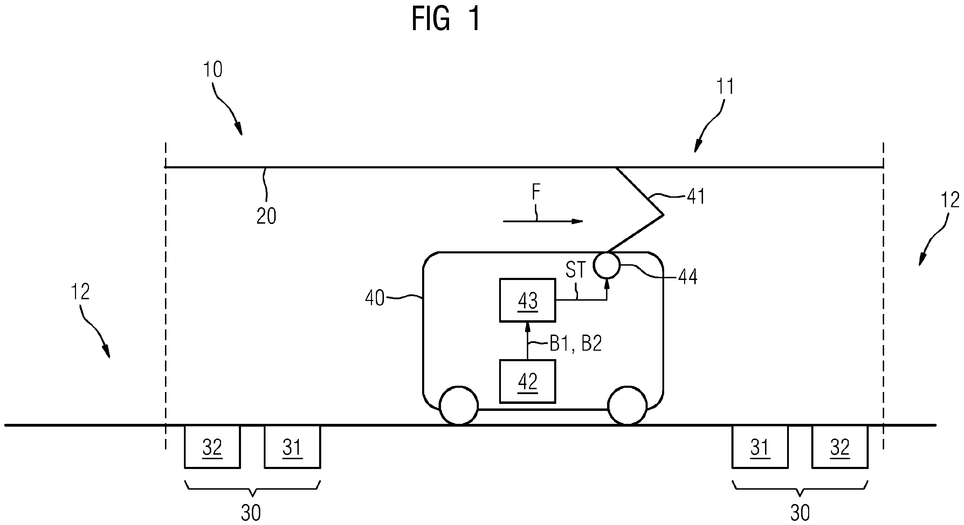

Die Figur 1 zeigt ein Ausführungsbeispiel für eine Schienenfahrzeugstrecke 10 einer Eisenbahngleisanlage, die einen elektrifizierten Abschnitt 11 und zwei nicht elektrifizierte Abschnitte 12 umfasst. Der elektrifizierte Abschnitt 11 weist einen streckenseitigen Leiter in Form einer Oberleitung 20 auf, die mit einem nicht weiter gezeigten streckenseitigen Energieversorgungsnetz der Schienenfahrzeugstrecke 10 verbunden ist.

An seinen beiden Abschnittsenden ist der elektrifizierte Abschnitt 11 jeweils mit einem Balisenpaar 30 ausgestattet, das eine Balise eines ersten Balisentyps 31 und eine Balise eines zweiten Balisentyps 32 umfasst. Die Anordnung der Balisen des ersten Balisentyps 31 und des zweiten Balisentyps 32 ist dabei derart gewählt, dass die beiden Balisen des ersten Balisentyps 31 - bezogen auf den elektrifizierten Abschnitt 11 - innen liegen und die beiden Balisen des zweiten Balisentyps 32 außen liegen.

Bei der Darstellung gemäß Figur 1 wird der elektrifizierte Abschnitt 11 von einem Schienenfahrzeug 40 befahren, das sich entlang der Fahrtrichtung F in der Figur 1 nach rechts bewegt.

Das Schienenfahrzeug 40 ist mit einem Stromabnehmer 41 in Form eines Pantographen ausgestattet, der mit der Oberleitung 20 elektrisch in Kontakt steht und eine elektrische Energieversorgung des Schienenfahrzeugs 40 mittels des streckenseitigen Energieversorgungsnetzes ermöglicht.

Das Schienenfahrzeug 40 ist darüber hinaus mit einer Erkennungseinrichtung 42 ausgestattet, die geeignet ist, das Passieren von streckenseitigen Balisen zu erfassen und Balisen des ersten Balisentyps 31 von Balisen des zweiten Balisentyps 32 zu unterscheiden und jeweils beim Passieren einer Balise des ersten Balisentyps 31 ein erstes Balisenerkennungssignal B1 und beim Passieren von Balisen des zweiten Balisentyps 32 jeweils ein zweites Balisenerkennungssignal B2 zu erzeugen.

Der Erkennungseinrichtung 42 ist eine Steuereinrichtung 43 nachgeordnet, die anhand der zeitlichen Reihenfolge des Auftretens von ersten Balisenerkennungssignalen B1 und zweiten Balisenerkennungssignalen B2 ein Steuersignal ST erzeugt, das die Stellung des Stromabnehmers 41 selbst verändert oder das Umstellen der Stellung des Stromabnehmers 41 ermöglicht oder empfiehlt.

Bei dem Ausführungsbeispiel gemäß Figur 1 steht die Steuereinrichtung 43 mit einem elektrisch steuerbaren pneumatischen Ventil 44 in Verbindung, das bei Vorliegen eines Steuersignals ST in Form eines Einfahrsteuersignals geöffnet wird und das automatische Einfahren des Stromabnehmers 41 erzwingt. Bei Vorliegen eines Steuersignals ST in Form eines Freigabesignals wird das pneumatische Ventil 44 geschlossen und ermöglicht somit das Ausfahren des Stromabnehmers 41 durch Druckbeaufschlagung, beispielsweise auf einen entsprechenden Befehl des Schienenfahrzeugführers hin.

Die Steuereinrichtung 43 erzeugt als Steuersignal ST ein Einfahrsteuersignal, das ein Einfahren des Stromabnehmers auslöst, wenn das erste Balisenerkennungssignal B1 zeitlich vor dem zweiten Balisenerkennungssignal B2 erkannt wird. Wird hingegen von der Erkennungseinrichtung 42 signalisiert, dass das erste Balisenerkennungssignal B1 nach dem zweiten Balisenerkennunssignal B2 erkannt worden ist, so wird die Steuereinrichtung 43 ausgangsseitig als Steuersignal ein Freigabesignal erzeugen, das ein Ausfahren des Stromabnehmers selbst auslöst oder das Ausfahren des Stromabnehmers zumindest ermöglicht, beispielsweise durch pneumatische Druckbeaufschlagung auf einen entsprechenden Steuerbefehl des Schienenfahrzeugführers hin.

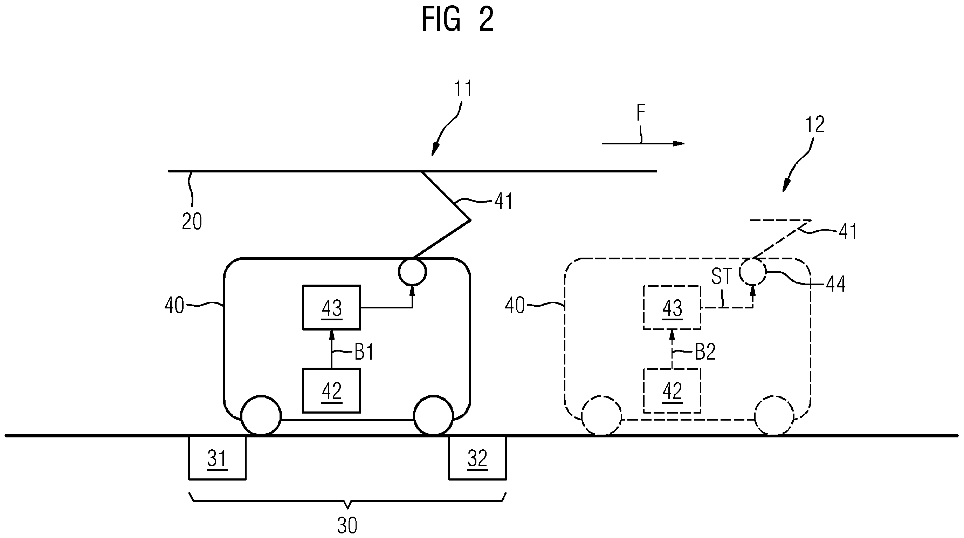

Die Figur 2 zeigt die Fahrt des Schienenfahrzeugs 40 gemäß Figur 1 entlang der Fahrtrichtung F beim Passieren des in der Figur 1 rechten Balisenpaares 30. Es lässt sich erkennen, dass zunächst die Balise des ersten Balisentyps 31 passiert wird und erst danach die Balise des zweiten Balisentyps 32. Demgemäß wird also von der Erkennungseinrichtung 42 zunächst das erste Balisenerkennungssignal B1 zur Steuereinrichtung 43 übermittelt und erst anschließend das zweite Balisenerkennungssignal B2.

Aufgrund der beschriebenen Reihenfolge des Auftretens der beiden Balisenerkennungssignale B1 und B2 wird die Steuereinrichtung 43 ausgangsseitig als Steuersignal ST ein Einfahrsteuersignal erzeugen, das ein Einfahren des Stromabnehmers 41 durch das Öffnen des pneumatischen Ventils 44 erzwingt.

In der Figur 2 gestrichelt dargestellt ist das Schienfahrzeug 40 mit dem eingefahrenen Stromabnehmer 41, nachdem das in der Figur 1 rechte Balisenpaar 30 vollständig passiert worden ist.

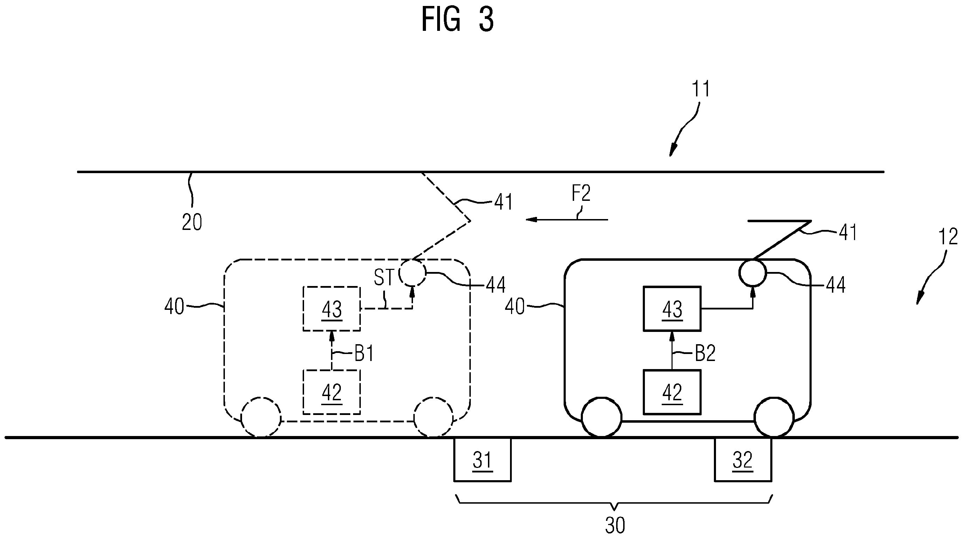

Die Figur 3 zeigt die Fahrt des Schienenfahrzeugs 40 in umgekehrter Fahrtrichtung entlang des Pfeiles F2. Es lässt sich erkennen, dass beim Einfahren vom nichtelektrifizierten Abschnitt 12 in den elektrifizierten Abschnitt 11 hinein zuerst die Balise des zweiten Balisentyps 32 passiert wird und erst nachfolgend die Balise des ersten Balisentyps 31. Demgemäß wird die Erkennungseinrichtung 42 zunächst das zweite Balisenerkennungssignal B2 und erst danach das erste Balisenerkennungssignal B1 erzeugen und zur Steuereinrichtung 43 übermitteln.

Die Steuereinrichtung 43 wird nun als Steuersignal ST ausgangsseitig ein Freigabesignal erzeugen, das ein Ausfahren des Stromabnehmers 41 auslöst oder ermöglicht, beispielsweise durch eine Druckbeaufschlagung des pneumatischen Ventils 44 seitens des Schienenfahrzeugführers, da die Reihenfolge der Balisenerkennungssignale B1 und B2 ein Einfahren in einen elektrifizierten Abschnitt signalisiert.

In der Figur 3 gestrichelt dargestellt ist das Schienfahrzeug 40 mit dem ausgefahrenen Stromabnehmer 41, nachdem das Balisenpaar 30 vollständig passiert worden ist.

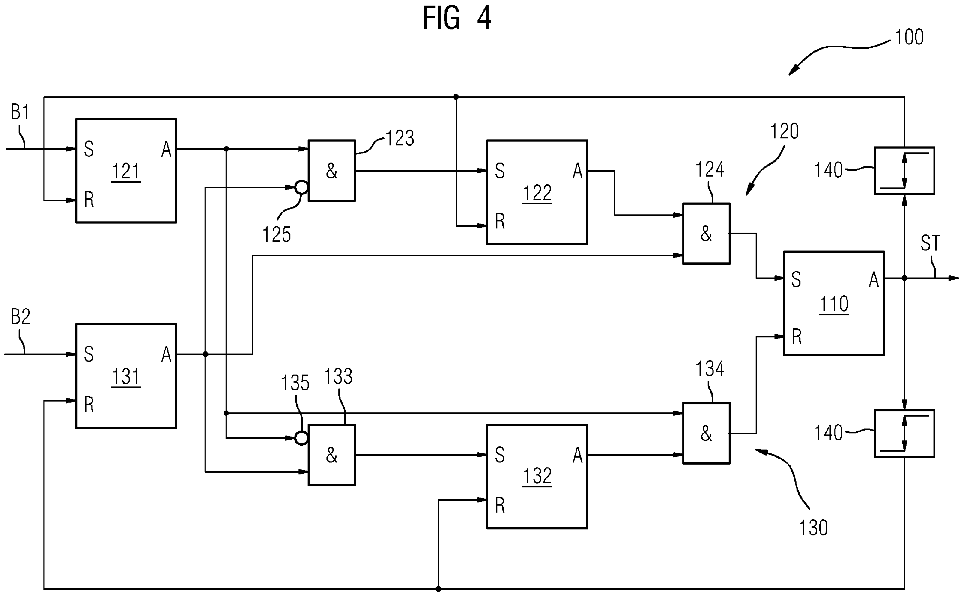

Die Figur 4 zeigt ein Ausführungsbeispiel für eine hartverdrahtete Logikschaltung 100, die als oder innerhalb der Steuereinrichtung 43 des Schienenfahrzeugs 40 gemäß den Figuren 1 bis 3 eingesetzt werden kann. Die Logikschaltung 100 gemäß Figur 4 weist als Ausgangsflipflop 110 ein RS-Flipflop auf, das einen Setzeingang S und einen Rücksetzeingang R umfasst. An einem Signalausgang A des Ausgangsflipflops 110 wird ein binäres Ausgangssignal erzeugt, das das Steuersignal ST der Steuereinrichtung 43 gemäß den Figuren 1 bis 3 bildet. Weist das Ausgangsflipflop am Signalausgang A eine logische "1" auf, so bildet das binäre Ausgangssignal als Steuersignal ein Einfahrsteuersignal, das ein Einfahren des Stromabnehmers 41 erzwingt, indem es das pneumatische Ventil 44 öffnet. Weist das Ausgangssignal am Ausgang A des Ausgangsflipflops 110 hingegen eine logische "0" auf, so wird das pneumatische Ventil 44 geschlossen, sodass der Stromabnehmer 41 nachfolgend durch eine Druckbeaufschlagung ausgefahren werden kann.

Dem Setzeingang S des Ausgangsflipflops 110 ist ein Setzzweig 120 vorgeordnet, der ein erstes Hilfsflipflop 121, ein zweites Hilfsflipflop 122, ein erstes UND-Glied 123, ein zweites UND-Glied 124 und einen Inverter 125 umfasst.

Dem Rücksetzeingang R110 des Ausgangsflipflops 110 ist ein Rücksetzzweig 130 vorgeordnet, der ein erstes Hilfsflipflop 131, ein zweites Hilfsflipflop 132, ein erstes UND-Glied 133, ein zweites UND-Glied 134 und einen Inverter 135 umfasst.

Die Hilfsflipflops sind jeweils RS-Flipflops und weisen jeweils einen Setzeingang S, einen Rücksetzeingang R und einen Ausgang A auf.

Verlässt das Schienenfahrzeug 40 gemäß den Figuren 1 bis 3 den elektrifizierten Abschnitt 11 und passiert dabei eines der Abschnittsenden, so wird die Erkennungseinrichtung 42 zunächst die Balise des ersten Balisentyps 31 erkennen und das erste Balisenerkennungssignal B1 erzeugen, das zum Setzeingang S des ersten Hilfsflipflops 121 gelangt und ein Setzen des ersten Hilfsflipflops 121 auslöst. Da zu dem Zeitpunkt des Auftretens des ersten Balisenerkennungssignals B1 die andere Balise des Balisenpaars 30 noch nicht überfahren worden ist und somit das zweite Balisenerkennungssignal B2 noch nicht vorliegt, wird auch das zweite Hilfsflipflop 122 gesetzt werden und den Eingang des zweiten UND-Gliedes 124 mit einer logischen "1" beaufschlagen.

Sobald anschließend am zweiten UND-Glied 124 auch das zweite Balisenerkennungssignal B2 vorliegt, wird das zweite UND-Glied 124 eine logische "1" zum Setzeingang S des Ausgangsflipflops 110 übermitteln, sodass an dessen Signalausgang A als Steuersignal ST ein Einfahrsteuersignal erzeugt wird, das zu einem Zwangssenken des Stromabnehmers 41 führt. Der Pegelwechsel des Steuersignals ST wird von Flankenerkennungseinheiten 140 erkannt, die bei Auftreten eines Flankenwechsels des Steuersignals ST jeweils ein Zurücksetzen der Hilfsflipflops 121, 122, 131 und 132 an den jeweiligen Rücksetzeingängen R bewirken.

Tritt im zurückgesetzten Zustand der Hilfsflipflops zunächst das zweite Balisenerkennungssignal B2 und erst anschließend das erste Balisenerkennungssignal B1 auf, so wird - analog zu den Ausführungen im Zusammenhang mit dem Setzzweig 120 - der Rücksetzzweig 130 aktiviert und durch ein Setzen der beiden Hilfsflipflops 131 und 132 das Ausgangsflipflop 110 am Rücksetzeingang R zurückgesetzt, sodass das Steuersignal ST von einer logischen "1" wieder auf eine logische "0" gesetzt wird. Weist das Steuersignal ST eine logische "0" auf, so wird das pneumatische Ventil 44 des Schienenfahrzeugs 40 gemäß den Figuren 1 bis 3 wieder geschlossen, wodurch ein Aus- bzw. Hochfahren des Stromabnehmers 41 durch Druckbeaufschlagung ermöglicht wird.

Beim Zurücksetzen des Steuersignals ST wird von den Flankenerkennungseinheiten 140 wieder der Flankenwechsel erkannt und es werden die Hilfsflipflops des Setzzweiges 120 und des Rücksetzzweiges 130 wieder zurückgesetzt, wie dies im Zusammenhang mit dem Setzen des Ausgangsflipflops 110 über den Setzzweig 120 bereits erläutert worden ist.

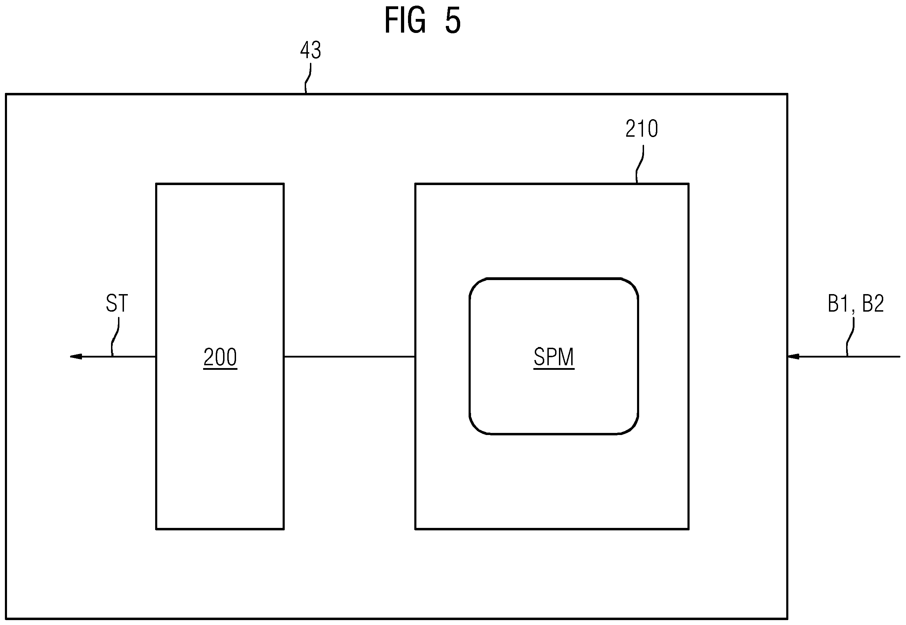

Die Figur 5 zeigt ein nicht erfindungsgemäßes weiteres Ausführungsbeispiel für eine Steuereinrichtung 43, die bei dem Schienenfahrzeug gemäß den Figuren 1 bis 3 eingesetzt werden kann. Die Steuereinrichtung 43 weist eine Recheneinrichtung 200 auf, die mit einem Speicher 210 in Verbindung steht. In dem Speicher 210 ist ein Steuerprogrammmodul SPM abgespeichert, das bei Ausführung durch die Recheneinrichtung 200 das Steuersignal ST in Abhängigkeit von der zeitlichen Reihenfolge des Auftretens von ersten und zweiten Balisenerkennungssignalen B1 und B2 erzeugt. Das Steuerprogrammmodul SPM kann beispielsweise so programmiert sein, dass es die im Zusammenhang mit der Figur 4 erläuterte Logikschaltung 100 abbildet. Die Steuereinrichtung 43 gemäß Figur 5 ist somit eine softwareimplementierte Variante für eine Steuereinrichtung 43 im Unterschied zu der hart verdrahteten Logikvariante, wie sie im Zusammenhang mit der Figur 4 erläutert worden ist.

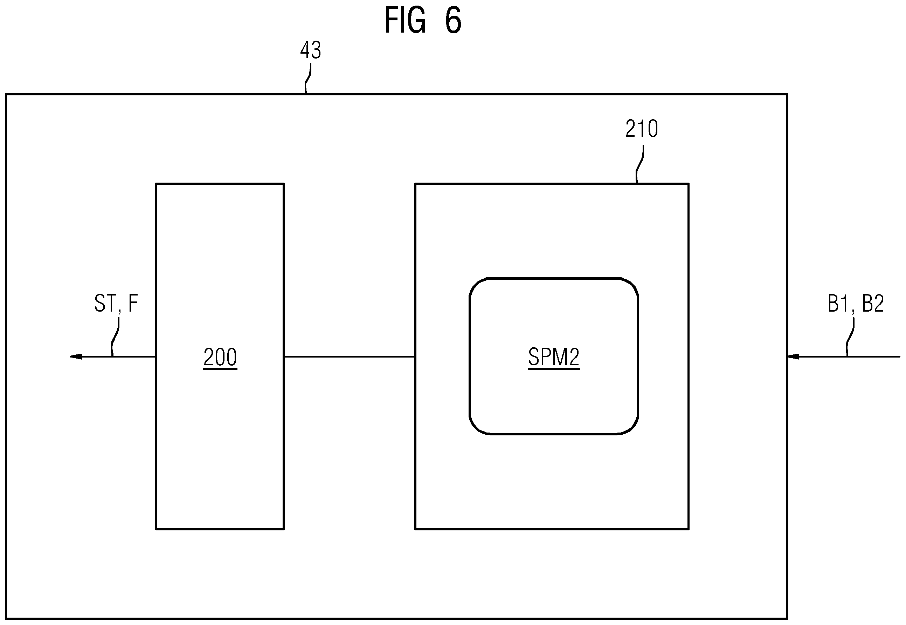

Die Figur 6 zeigt eine Ausführungsvariante des nicht erfindungsgemäßen Ausführungsbeispiels gemäß Figur 5. Bei der Ausführungsvariante gemäß Figur 5 ist in dem Speicher 210 ein Softwareprogrammmodul SPM2 abgespeichert, das - verglichen mit der Ausführungsvariante gemäß Figur 5 bzw. der Logikschaltung gemäß Figur 4 - eine zusätzliche Plausibilitätsprüfung vorsieht. Konkret wird die Recheneinrichtung 200 bei der Durchführung des Softwareprogrammmoduls SPM2 zusätzlich testen bzw. prüfen, ob nach dem Auftreten eines ersten oder zweiten Balisenerkennungssignals B1 bzw. B2 innerhalb einer vorgegebenen Zeitspanne, die vorzugsweise geschwindigkeitsabhängig ermittelt wird, auch das entsprechend andere Balisenerkennungssignal B2 bzw. B1 auftritt. In der Schienenfahrzeugstrecke 10 wird der Abstand der Balisen der beiden Balisentypen 31 und 32 jeweils in einem vorgegebenen Rahmen liegen, sodass unter Heranziehung der jeweiligen Fahrgeschwindigkeit des Schienenfahrzeugs 40 ausgerechnet werden kann, wann das jeweils nächste Balisenerkennungssignal auftreten müsste, wenn eines der Balisenerkennungssignale erkannt worden ist.

Stellt die Steuereinrichtung 43 fest, dass innerhalb der zu erwartenden Zeitspanne ein weiteres Balisenerkennungssignal nicht auftritt oder aber ein falsches Balisenerkennungssignal auftritt, also nicht der zu erwartende Signalwechsel erkannt worden ist, so erzeugt sie vorzugsweise ein Fehlersignal F, das auf einen Fehler der Balisenerkennung hinweist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Schienenfahrzeugstrecke
- 11: elektrifizierter Abschnitt
- 12: nichtelektrifizierter Abschnitt
- 20: Leiter / Oberleitung
- 30: Balisenpaar
- 31: Balise eines ersten Balisentyps
- 32: Balise eines zweiten Balisentyps
- 40: Schienenfahrzeug
- 41: Stromabnehmer / Pantograph
- 42: Erkennungseinrichtung
- 43: Steuereinrichtung
- 44: pneumatisches Ventil
- 100: hartverdrahtete Logikschaltung
- 110: Ausgangsflipflop
- 120: Setzzweig
- 121: erstes Hilfsflipflop
- 122: zweites Hilfsflipflop
- 123: erstes UND-Glied
- 124: zweites UND-Glied
- 125: Inverter
- 130: Rücksetzzweig
- 131: erstes Hilfsflipflop
- 132: zweites Hilfsflipflop
- 133: erstes UND-Glied
- 134: zweites UND-Glied
- 135: Inverter
- 140: Flankenerkennungseinheit
- 200: Recheneinrichtung
- 210: Speicher

- A: Signalausgang
- B1: erstes Balisenerkennungssignal
- B2: zweites Balisenerkennungssignal
- F: Fahrtrichtung
- F2: Pfeil
- R: Rücksetzeingang
- S: Setzeingang
- SPM: Steuerprogrammmodul
- SPM2: Steuerprogrammmodul
- ST: Steuersignal

## Patentansprüche

1. Fahrzeug (40) mit zumindest einem verstellbaren Stromabnehmer (41), der in einer ausgefahrenen Stellung zur Anlage an einem streckenseitigen Leiter (20) eines streckenseitigen Energieversorgungsnetzes geeignet ist und in einer eingefahrenen Stellung von dem streckenseitigen Leiter (20) getrennt ist, wobei
- das Fahrzeug (40) eine Erkennungseinrichtung (42) aufweist, die geeignet ist, das Passieren von streckenseitigen Balisen eines ersten Balisentyps (31) und eines zweiten Balisentyps (32) zu unterscheiden und jeweils beim Passieren einer Balise des ersten Balisentyps (31) ein erstes Balisenerkennungssignal (B1) und beim Passieren von Balisen des zweiten Balisentyps (32) jeweils ein zweites Balisenerkennungssignal (B2) zu erzeugen,
- das Fahrzeug (40) außerdem eine Steuereinrichtung (43) aufweist, die anhand der zeitlichen Reihenfolge des Auftretens von ersten und zweiten Balisenerkennungssignalen (B1, B2) ein Steuersignal (ST) erzeugt, das die Stellung des Stromabnehmers (41) selbst verändert oder das Umstellen der Stellung des Stromabnehmers (41) ermöglicht,
**dadurch gekennzeichnet, dass**
die Steuereinrichtung (43) durch eine hartverdrahtete Logikschaltung (100) gebildet ist oder diese zumindest auch aufweist, wobei die Steuereinrichtung (43) ausgangsseitig ein Ausgangsflipflop (110) aufweist, das
- an einem Setzeingang (S) mit einem Setzsignal gesetzt wird, wenn das erste Balisenerkennungssignal (B1) vor dem zweiten Balisenerkennungssignal (B2) anliegt, und
- an einem Rücksetzeingang (R) rückgesetzt wird, wenn das zweite Balisenerkennungssignal (B2) vor dem ersten Balisenerkennungssignal (B1) anliegt,
- wobei dem Setzeingang (S) des Ausgangsflipflops (110) ein Setzzweig (120) und dem Rücksetzeingang (R) des Ausgangsflipflops (110) ein Rücksetzzweig (130) vorgeordnet ist und
- wobei der Setzzweig (120) und der Rücksetzzweig (130) jeweils zumindest ein Hilfsflipflop (121, 122, 131, 132) aufweisen, das an einem Rücksetzeingang (R) zurückgesetzt wird, wenn ein binäres Ausgangssignal an einem Signalausgang (A) des Ausgangsflipflops (110) einen Flankenwechsel vollzieht.

2. Fahrzeug (40) nach Anspruch 1,
**dadurch gekennzeichnet, dass**
die Steuereinrichtung (43) ausgangsseitig als Steuersignal (ST) ein Einfahrsteuersignal, das ein Einfahren des Stromabnehmers (41) auslöst, erzeugt, wenn das erste Balisenerkennungssignal (B1) vor dem zweiten Balisenerkennungssignal (B2) erkannt wird.

3. Fahrzeug (40) nach einem der voranstehenden Ansprüche,
**dadurch gekennzeichnet, dass**
die Steuereinrichtung (43) ausgangsseitig als Steuersignal (ST) ein Freigabesignal, das ein Ausfahren des Stromabnehmers (41) selbst auslöst oder das Ausfahren des Stromabnehmers (41) zumindest ermöglicht, erzeugt, wenn das erste Balisenerkennungssignal (B1) nach dem zweiten Balisenerkennungssignal (B2) erkannt wird.

4. Fahrzeug (40) nach einem der voranstehenden Ansprüche,
**dadurch gekennzeichnet, dass**
das Fahrzeug (40) ein pneumatisches Ventil (44) aufweist, das
- bei Vorliegen eines Einfahrsteuersignals, das ein Einfahren des Stromabnehmers auslöst, geöffnet wird und das Einfahren des Stromabnehmers (41) erzwingt und
- bei Vorliegen eines Freigabesignals, das ein Ausfahren des Stromabnehmers selbst auslöst oder das Ausfahren des Stromabnehmers zumindest ermöglicht, geschlossen wird und ein Ausfahren des Stromabnehmers (41) durch Druckbeaufschlagung ermöglicht.

5. Fahrzeug (40) nach einem der voranstehenden Ansprüche,
**dadurch gekennzeichnet, dass**
- an dem Signalausgang (A) des Ausgangsflipflops (110) als das Steuersignal (ST) das binäre Ausgangssignal ausgegeben wird,
- wobei einer der binären Signalpegel des binären Ausgangssignals ein Freigabesignal, das ein Ausfahren des Stromabnehmers selbst auslöst oder das Ausfahren des Stromabnehmers zumindest ermöglicht, und der andere Signalpegel des binären Ausgangssignals ein Einfahrsteuersignal,
das ein Einfahren des Stromabnehmers auslöst, bildet.

6. Verfahren zum Betreiben eines Fahrzeugs (40), das mit einem verstellbaren Stromabnehmer (41), der in einer ausgefahrenen Stellung zur Anlage an einem streckenseitigen Leiter (20) eines streckenseitigen Energieversorgungsnetzes geeignet ist und in einer eingefahrenen Stellung von dem streckenseitigen Leiter (20) getrennt ist, ausgestattet ist, wobei der Stromabnehmer (41) nach dem Einfahren in einen elektrifizierten Streckenabschnitt (11) ausgefahren wird oder zumindest ausgefahren werden kann und vor dem Verlassen eines elektrifizierten Streckenabschnitts (11) eingefahren wird,
- das Passieren von streckenseitigen Balisen eines ersten Balisentyps (31) und eines zweiten Balisentyps (32) unterschieden wird und jeweils beim Passieren einer Balise des ersten Balisentyps (31) ein erstes Balisenerkennungssignal (B1) und beim Passieren von Balisen des zweiten Balisentyps (32) jeweils ein zweites Balisenerkennungssignal (B2) erzeugt wird,
- mittels einer Steuereinrichtung (43) anhand der zeitlichen Reihenfolge des Auftretens von ersten und zweiten Balisenerkennungssignalen (B1, B2) ein Steuersignal (ST) erzeugt wird, das die Stellung des Stromabnehmers (41) selbst verändert oder das Umstellen der Stellung des Stromabnehmers (41) ermöglicht,
**dadurch gekennzeichnet, dass**
die Steuereinrichtung (43) durch eine hartverdrahtete Logikschaltung (100) gebildet ist oder diese zumindest auch aufweist, wobei die Steuereinrichtung (43) ausgangsseitig ein Ausgangsflipflop (110) aufweist, das
- an einem Setzeingang (S) mit einem Setzsignal gesetzt wird, wenn das erste Balisenerkennungssignal (B1) vor dem zweiten Balisenerkennungssignal (B2) anliegt, und
- an einem Rücksetzeingang (R) rückgesetzt wird, wenn das zweite Balisenerkennungssignal (B2) vor dem ersten Balisenerkennungssignal (B1) anliegt,
- wobei dem Setzeingang (S) des Ausgangsflipflops (110) ein Setzzweig (120) und dem Rücksetzeingang (R) des Ausgangsflipflops (110) ein Rücksetzzweig (130) vorgeordnet ist und
- wobei der Setzzweig (120) und der Rücksetzzweig (130) jeweils zumindest ein Hilfsflipflop (121, 122, 131, 132) aufweisen, das an einem Rücksetzeingang (R) zurückgesetzt wird, wenn das binäre Ausgangssignal am Signalausgang (A) des Ausgangsflipflops (110) einen Flankenwechsel vollzieht.

## Claims

1. Vehicle (40) with at least one adjustable current collector (41), which, in an extended position, is suitable for contact with a trackside conductor (20) of a trackside power supply network and in a retracted position is separated from the trackside conductor (20), wherein
- the vehicle (40) has a detection facility (42), which is suitable for differentiating between the passing of trackside balises of a first balise type (31) and a second balise type (32) and in each instance for generating a first balise detection signal (B1) when passing a balise of the first balise type (31) and a second balise detection signal (B2) when passing balises of the second balise type (32) in each instance,
- the vehicle (40) moreover has a control facility (43), which generates a control signal (ST) on the basis of the temporal sequence of the occurrence of first and second balise detection signals (B1, B2), said control signal changing the position of the current collector (41) itself or enabling the change in position of the current collector (41), **characterised in that**
the control facility (43) is formed by a hard-wired logic circuit (100) or also at least has this, wherein the control facility (43) has an output flipflop (110) on the output side, which
- is set with a set signal at a set input (S) when the first balise detection signal (B1) lies in front of the second balise detection signal (B2), and
- is reset at a reset input (R) when the second balise detection signal (B2) lies in front of the first balise detection signal (B1),
- wherein a set branch (120) is arranged upstream of the set input (S) of the output flipflip (110) and a reset branch (130) is arranged upstream of the reset input (R) of the output flipflop (110) and
- wherein the set branch (120) and the reset branch (130) each have at least one auxiliary flipflop (121, 122, 131, 132) which is reset at a reset input (R) when a binary output signal at a signal output (A) of the output flipflop (110) performs a flank changeover.

2. Vehicle (40) according to claim 1,
**characterised in that**
the control facility (43) generates a retraction control signal as a control signal (ST) on the output side, said retraction control signal triggering a retraction of the current collector (41) when the first balise detection signal (B1) is detected upstream of the second balise detection signal (B2).

3. Vehicle (40) according to one of the preceding claims,
**characterised in that**
the control facility (43) generates a release signal as a control signal (ST) on the output side, said release signal triggering the extension of the current collector (41) itself or at least enabling the extension of the current collector (41), when the first balise detection signal (B1) is detected after the second balise detection signal (B2).

4. Vehicle (40) according to one of the preceding claims,
**characterised in that**
the vehicle (40) has a pneumatic valve (44), which
- is opened with the presence of a retraction control signal which triggers a retraction of the current collector and forces the retraction of the current collector (41), and
- is closed with the presence of a release signal, which triggers an extension of the current collector itself or at least enables the extension of the current collector, and enables an extension of the current collector (41) by means of applying pressure.

5. Vehicle (40) according to one of the preceding claims, **characterised in that**
- the binary output signal is output as the control signal (ST) at the signal output (A) of the output flipflop (110),
- wherein one of the binary signal levels of the binary output signal forms a release signal, which triggers an extension of the current collector or at least enables the extension of the current collector, and the other signal level of the binary output signal forms a retraction control signal which triggers a retraction of the current collector.

6. Method for operating a vehicle (40), which is equipped with an adjustable current collector (41), which, in an extended position, is suitable for contact with a trackside conductor (20) of a trackside power supply network and, in a retracted position, is separated from the trackside conductor (20), wherein after retraction the current collector (41) is or at least can be extended into an electrified rail segment (11) and is retracted before leaving an electrified rail segment (11),
- the passing of trackside balises of a first balise type (31) and a second balise type (32) is differentiated and in each case when passing a balise of the first balise type (31), a first balise detection signal (B1) is generated and when passing balises of the second balise type (32), a second balise detection signal (B2) is generated in each case,
- a control signal (ST) is generated by means of a control facility (43) on the basis of the temporal sequence of the occurrence of first and second balise detection signals (B1, B2), said control signal changing the position of the current collector (41) itself or enabling the change in position of the current collector (41),
**characterised in that**
the control facility (43) is formed by a hard-wired logic circuit (100) or at least has this, wherein the control facility (43) has an output flipflop (110) on the output side, which
- is set with a set signal at a set input (S) when the first balise detection signal (B1) lies in front of the second balise detection signal (B2) and
- is reset at a reset input (R), when the second balise detection signal (B2) lies in front of the first balise detection signal (B1),
- wherein a set branch (120) is arranged upstream of the set input (S) of the output flipflop (110) and a reset branch (130) is arranged upstream of the reset input (R) of the output flipflop (110) and
- wherein the set branch (120) and the reset branch (130) each have at least one auxiliary flipflop (121, 122, 131, 132), which is reset at a reset input (R) when the binary output signal performs a flank changeover at the signal output (A) of the output flipflop (110).

## Revendications

1. Véhicule (40) comprenant au moins un appareil (41) réglable de prise de courant, qui, dans une position déployée, est propre à venir en contact avec un conducteur (20) sur la voie d'un réseau d'alimentation en énergie sur la voie et, dans une position escamotée, est séparé du conducteur (20) sur la voie, dans lequel
- le véhicule (40) a un dispositif (42) de détection, qui est propre à distinguer le passage devant des balises sur la voie d'un premier type (31) de balise et d'un deuxième type (32) de balise, et à produire respectivement au passage devant une balise du premier type (31) de balise, un premier signal (B1) de détection de balise et au passage devant des balises du deuxième type (32) de balise respectivement un deuxième signal (B2) de détection de balise,
- le véhicule (40) a en outre un dispositif (43) de commande, qui, à l'aide de la succession dans le temps de l'apparition de premiers et deuxième signaux (B1, B2) de détection de balise, produit un signal (ST) de commande, qui modifie soi même la position de l'appareil (41) de prise de courant ou rend possible de changer la position de l'appareil (41) de prise de courant,
**caractérisé en ce que**
le dispositif (43) de commande est formé d'un circuit (100) logique câblé ou comporte du moins aussi celui-ci, dans lequel le dispositif (43) de commande a, du côté de la sortie, une bascule (110) de sortie, qui
- est mise à l'état à une entrée (S) de mise à l'état par un signal de mise à l'état, si le premier signal (B1) de détection de balise s'applique avant le deuxième signal (B2) de détection de balise, et
- est remise à l'état initial à une entrée (R) de remise à l'état initial, si le deuxième signal (B2) de détection de balise s'applique avant le premier signal (B1) de détection de balise,
- dans lequel, en amont de l'entrée (S) de mise à l'état de la bascule (110) de sortie, est montée une branche (120) de mise à l'état et en amont de l'entrée (R) de remise à l'état initial de la bascule (110) de sortie, une branche (130) de remise à l'état initial, et
- dans lequel la branche (120) de mise à l'état et la branche (130) de remise à l'état initial ont chacune au moins une bascule (121, 122, 131, 132) auxiliaire, qui est remise à l'état initial à une entrée (R) de remise à l'état initial, si un signal de sortie binaire, à une sortie (A) de signal de la bascule (110) de sortie, accomplit un changement de flanc.

2. Véhicule (40) suivant la revendication 1,
**caractérisé en ce que**
le dispositif (43) de commande produit, du côté de la sortie comme signal (ST) de commande, un signal de commande d'escamotage, qui déclenche un escamotage de l'appareil (41) de prise de courant, si le premier signal (B1) de détection de balise est détecté avant le deuxième signal (B2) de détection de balise.

3. Véhicule (40) suivant l'une des revendications précédentes,
**caractérisé en ce que**
le dispositif (43) de commande produit, du côté de la sortie comme signal (ST) de commande, un signal de validation, qui déclenche soi même un déploiement de l'appareil (41) de prise de courant, ou du moins rend possible le déploiement de l'appareil (41) de prise de courant, si le premier signal (B1) de détection de balise est détecté après le deuxième signal (B2) de détection de balise.

4. Véhicule (40) suivant l'une des revendications précédentes,
**caractérisé en ce que**
le véhicule (40) a une soupape (44) pneumatique
- que l'on ouvre en présence d'un signal de commande d'escamotage, qui déclenche un escamotage de l'appareil de prise de courant, et force l'escamotage de l'appareil (41) de prise de courant,
- et que l'on ferme en présence d'un signal de validation, qui déclenche soi même un déploiement de l'appareil de prise de courant, ou qui du moins rend possible le déploiement de l'appareil de prise de courant et rend possible un déploiement de l'appareil (41) de prise de courant par une alimentation en pression.

5. Véhicule (40) suivant l'une des revendications précédentes,
**caractérisé en ce que**,
- à la sortie (A) du signal de la bascule (110) de sortie, on émet, comme signal (ST) de commande, le signal de sortie binaire,
- dans lequel l'un des niveaux du signal de sortie binaire forme un signal de validation, qui déclenche soi même un déploiement de l'appareil de prise de courant, ou qui du moins rend possible le déploiement de l'appareil de prise de courant, et l'autre niveau du signal de sortie binaire forme un signal de commande d'escamotage, qui déclenche un escamotage de l'appareil de prise de courant.

6. Procédé pour faire fonctionner un véhicule (40), qui est équipé d'un appareil (41) réglable de prise de courant, qui, dans une position déployée, est propre à venir en contact avec un conducteur (20) sur la voie d'un réseau d'alimentation en énergie sur la voie et, dans une position escamotée, est séparé du conducteur (20) sur la voie, dans lequel on déploie l'appareil (41) de prise de courant, après l'entrée dans une section (11) de voie électrifiée, ou du moins on peut le déployer et on l'escamote, avant de quitter une section (11) de voie électrifiée,
- on distingue le passage devant des balises sur la voie d'un premier type (31) de balise et d'un deuxième type (32) de balise, et on produit respectivement au passage devant une balise du premier type (31) de balise, un premier signal (B1) de détection de balise et, lors du passage devant des balises du deuxième type (32) de balise respectivement un deuxième signal (B2) de détection de balise,
- au moyen d'un dispositif (43) de commande, on produit, à l'aide de la succession dans le temps de l'apparition de premiers et deuxièmes signaux (B1, B2) de détection de balise, un signal (ST) de commande, qui modifie soi même la position de l'appareil (41) de prise de courant ou qui rend possible le changement de la position de l'appareil (41) de prise de courant,
**caractérisé en ce que**
le dispositif (43) de commande est formé d'un circuit (100) logique câblé ou comporte, du moins aussi celui-ci, dans lequel le dispositif (43) de commande a, du côté de la sortie, une bascule (110) de sortie, qui
- est mise à l'état à une entrée (S) de mise à l'état par un signal de mise à l'état, si le premier signal (B1) de détection de balise s'applique avant le deuxième signal (B2) de détection de balise, et
- est remise à l'état initial à une entrée (R) de remise à l'état initial, si le deuxième signal (B2) de détection de balise s'applique avant le premier signal (B1) de détection de balise,
- dans lequel, en amont de l'entrée (S) de mise à l'état de la bascule (110) de sortie, est montée une branche (120) de mise à l'état et en amont de l'entrée (R) de remise à l'état initial de la bascule (110) de sortie, une branche (130) de remise à l'état initial, et
- dans lequel la branche (120) de mise à l'état et la branche (130) de remise à l'état initial ont chacune au moins une bascule (121, 122, 131, 132) auxiliaire, qui est remise à l'état initial à une entrée (R) de remise à l'état initial, si un signal de sortie binaire, à une sortie (A) de signal de la bascule (110) de sortie, accomplit un changement de flanc.
